# EUROPEAN PATENT APPLICATION

(11) **EP 3 617 894 A1**
(43) Date of publication of application: **04.03.2020**
(21) Application number: 17906846.5
(22) Date of filing: 19.07.2017
(51) Int. Cl.: G06F 13/40

(54) **INTERFACE EXPANSION APPARATUS**

(30) Priority: 27.04.2017 CN 201720462506 U
(71) Applicant: Guangdong Gopod Group Co., Ltd., Shenzhen, Guangdong 518108 (CN)
(72) Inventor: LIAO, Zhuowen, Shenzhen Guangdong 518108 (CN)
(74) Representative: Ipside
(86) International application number: PCT/CN2017/093571
(87) International publication number: WO 2018/196179

(57) **Abstract**

Provided is an interface expansion apparatus (100), comprising: a general interface module (10) for connection to a terminal (120), a first data interface module (20), a data transmission control module (30), a second data interface module (40), and a video signal interface module (50). When a device requiring access (110) is connected to the interface expansion apparatus (100) via the first data interface module (20), a data transmission path is formed by the first data interface module (20) and the general interface module (10), so that the device requiring access (110) performs data transmission with the terminal (120) through the data transmission path; when the device requiring access (110) is connected to the interface expansion apparatus (100) via the second data interface module (40), the data transmission control module (30) controls the data transmission between the device requiring access (110) and the terminal (120); and when the device requiring access (110) is connected to the interface expansion apparatus (100) via the video signal interface module (50), the data transmission control module (30) receives target display information sent by the terminal (120), and transmits the target display information to the device requiring access (110) for display. The utilization rate of a data interface of the terminal (120) is improved.

## Description

### Technical Field

The present invention falls within the technical field of electronics, and in particular relates to an interface expansion apparatus.

### Background Art

With the popularization of terminals (e.g. mobile phones, tablet computers, computers, etc.), they have become indispensable devices in people's life or work environment.

An existing terminal has been provided with data interfaces (e.g. a headphone jack, a USB interface or a Type-C interface) to realize wired connection between the terminal and other devices. However, only a few data interfaces can be provided in the terminal due to the limited size of the terminal, and the space between the interfaces provided is also relatively tight, so that when a data interface is connected to a particular device requiring access, due to the volume of the particular device or the size of the connector being physically too big, other interfaces in the terminal would become not available for connection to other devices requiring access.

In summary, there is a problem of a low utilization rate of data interfaces with existing terminals.

### Technical Problem

Embodiments of the present invention provide an interface expansion apparatus, which aims to solve the problem of a low utilization rate of data interfaces with the existing terminals.

### Solution to the Problem

### Technical Solutions

An object of the present invention is to provide an interface expansion apparatus for providing a device requiring access with a data interface for connection to a terminal, the interface expansion apparatus comprising: a general interface module for connection to the terminal, a first data interface module, a data transmission control module, a second data interface module, and a video signal interface module.

A signal transmission end of the first data interface module is connected to a first adapter end of the general interface module, a first data transmission end of the data transmission control module is connected to a second adapter end of the general interface module, a data end of the second data interface module is connected to a second data transmission end of the data transmission control module, and a signal end of the video signal interface module is connected to a third data transmission end of the data transmission control module.

When the device requiring access is connected to the interface expansion apparatus via the first data interface module, a data transmission path is formed by the first data interface module and the general interface module, so that the device requiring access performs data transmission with the terminal through the data transmission path.

When the device requiring access is connected to the interface expansion apparatus via the second data interface module, the data transmission control module controls the data transmission between the device requiring access and the terminal.

When the device requiring access is connected to the interface expansion apparatus via the video signal interface module, the data transmission control module receives target display information sent by the terminal, and transmits the target display information to the device requiring access for display.

### Beneficial Effects of the Invention

### Beneficial Effects

The present invention provides an interface expansion apparatus for providing a device requiring access with a data interface for connection to a terminal, the interface expansion apparatus comprising: a general interface module for connection to the terminal, a first data interface module, a data transmission control module, a second data interface module, and a video signal interface module; when a device requiring access is connected to the interface expansion apparatus via the first data interface module, a data transmission path is formed by the first data interface module and the general interface module, so that the device requiring access performs data transmission with the terminal through the data transmission path; when the device requiring access is connected to the interface expansion apparatus via the second data interface module, the data transmission control module controls the data transmission between the device requiring access and the terminal; and when the device requiring access is connected to the interface expansion apparatus via the video signal interface module, the data transmission control module receives target display information sent by the terminal, and transmits the target display information to the device requiring access for display. The utilization rate of a data interface of the terminal is improved.

### Brief Description of the Drawings

### Brief Description of the Drawings

FIG. 1 is a schematic structural diagram of an interface expansion apparatus provided in an embodiment of the present invention.
FIG. 2 is a schematic diagram of a specific structure of the interface expansion apparatus provided in an embodiment of the present invention.

### Embodiments of the Invention

### Detailed Description of Embodiments

In order to make the object, the technical solution and the advantages of the present invention clearer, the present invention will be further illustrated in detail below in conjunction with the accompanying drawings and embodiments. It is to be understood that specific embodiments described herein are only intended to explain the present invention, and are not taken to limit the present invention.

Embodiments of the present invention provide an interface expansion apparatus, which aims to solve the problem of a low utilization rate of data interfaces with the existing terminals.

The implementation of the present invention will be described in detail below in conjunction with the specific embodiments:

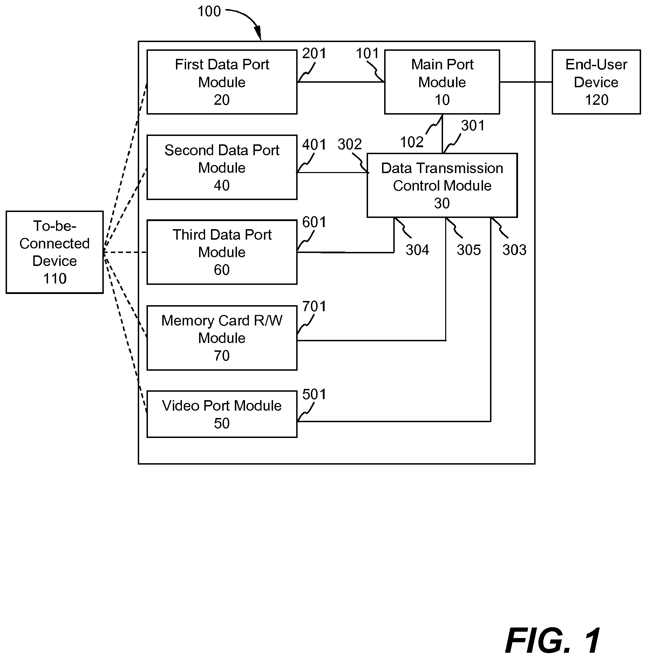

FIG. 1 shows the structure of an interface expansion apparatus according to an embodiment of the present invention. For convenience of illustration, only the parts related to the embodiment of the present invention are shown.

It should be noted that an interface expansion apparatus 100 provided in the present invention is for providing a device requiring access 110 with a data interface for connection to a terminal 120.

As shown in FIG. 1, an interface expansion apparatus 100 comprises a general interface module 10 for connection to a terminal 120, a first data interface module 20, a data transmission control module 30, a second data interface module 40, and a video signal interface module 50.

A signal transmission end of the first data interface module 20 is connected to a first adapter end of the general interface module 10, a first data transmission end of the data transmission control module 30 is connected to a second adapter end of the general interface module 10, a data end of the second data interface module 40 is connected to a second data transmission end of the data transmission control module 30, and a signal end of the video signal interface module 50 is connected to a third data transmission end of the data transmission control module 30.

When a device requiring access 110 is connected to the interface expansion apparatus 100 via the first data interface module 20, a data transmission path is formed by the first data interface module 20 and the general interface module 10, so that the device requiring access 110 performs data transmission with the terminal through the data transmission path.

When the device requiring access 110 is connected to the interface expansion apparatus 100 via the second data interface module 40, the data transmission control module 30 controls the data transmission between the device requiring access 110 and the terminal.

When the device requiring access 110 is connected to the interface expansion apparatus 100 via the video signal interface module 50, the data transmission control module 30 receives target display information sent by the terminal, and transmits the target display information to the device requiring access 110 for display.

It should be noted that, in this embodiment, the terminal 120 may be a mobile phone, a tablet computer, or a computer.

In all the embodiments of the invention, after the device requiring access 110 accesses the first data interface module 20, the first data interface module 20 directly performs data transmission with the terminal 120 via the general interface module 10.

Different from the first data interface module 20, when the device requiring access 110 accesses the second data interface module 40 or the video signal interface module 50, the data transmission control module 30 is needed to control data transmission between the device requiring access 110 and the terminal 120.

It can be understood that the device requiring access is a device (e.g. a USB flash disk, a mobile phone or a display) capable of performing data interaction with the terminal 120 through a wired connection.

In a practical application, the first data interface module 20, the second data interface module 40, and the video signal interface module 50 can simultaneously access different devices requiring access, and at the same time perform data interaction with the terminal.

As shown in FIG. 1, the interface expansion apparatus 100 further comprises a third data interface module 60 and a memory card reading/writing module 70.

The third data interface module 60 is connected to a fourth data transmission end of the data transmission control module 30, and the memory card reading/writing module 70 is connected to a memory card reading/writing end of the data transmission control module 30.

When the device requiring access 110 is a memory card, the memory card is connected to the interface expansion apparatus 100 via the memory card reading/writing module 70, and the terminal 120 reads/writes data from/to the memory card by means of the data transmission control module 30.

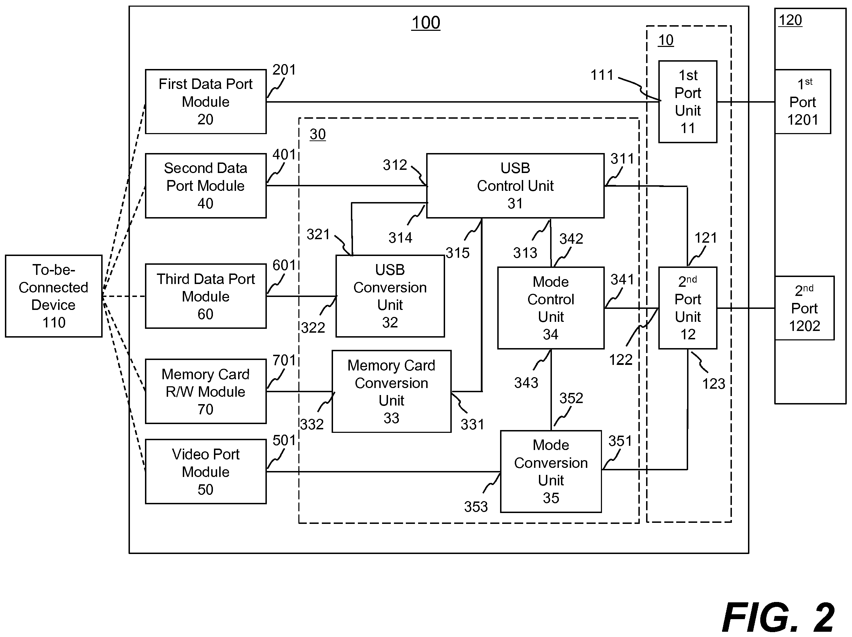

FIG. 2 shows a specific structure of an interface expansion apparatus according to an embodiment of the present invention. As shown in FIG. 2, the general interface module 10 comprises a first interface unit 11 and a second interface unit 12.

A device connection end of the first interface unit 11 is a first adapter end of the general interface module 10, and a device connection end of the second interface unit 12 is a second adapter end of the general interface module 10.

It should be noted that the first data interface module 20 is connected to the first interface unit 11. When the device requiring access 110 accesses the first data interface module 20, a data transmission path is formed between the first data interface module 20 and the first interface unit 11, thereby providing a physical basis for data transmission between the device requiring access 110 and the terminal 120.

As shown in FIG. 2, the data transmission control module 30 comprises a USB control unit 31, a USB conversion unit 32, a memory card conversion unit 33, a mode control unit 34, and a mode conversion unit 35.

A first data end of the USB control unit 31, a first data end of the mode control unit 34, and a first data end of the mode conversion unit 35 constitute a first data transmission end of the data transmission control module 30.

A second data end of the USB control unit 31 is a second data transmission end of the data transmission control module 30.

A third data end of the USB control unit 31 is connected to a second data end of the mode control unit 34, a third data end of the mode control unit 34 is connected to a second data end of the mode conversion unit 35, and a third data end of the mode conversion unit 35 is a third data transmission end of the data transmission control module 30.

A fourth data end of the USB control unit 31 is connected to a first transmission of the USB conversion unit 32, and a second transmission of the USB conversion unit 32 is the fourth data transmission end of the data transmission control module 30.

A fifth data end of the USB control unit 31 is connected to the signal transmission end of the memory card conversion unit 33, and the memory card conversion unit 33 comprises a plurality of data transmission ends, the plurality of data transmission ends constituting the memory card reading/writing end of the data transmission control module 30.

As shown in FIG. 2, the video signal interface module 50 comprises a VGA interface, a DVI interface, an HDMI interface, a Mini DP interface, or a DP interface.

It can be understood that the VGA interface, the DVI interface, the HDMI interface, the Mini DP interface, and the DP interface are all existing video signal interface modules.

For example, when the device requiring access 110 is a display, the device requiring access 110 is connected to the interface expansion apparatus 100 via the video signal interface module 50, and then performs data transmission with the terminal 120. The terminal 120 sends a target display signal to the mode control unit 34, and the mode control unit 34 controls the mode conversion unit 35 to perform mode conversion on the target display signal, and then outputs a corresponding display signal to the display for display.

As a possible implementation of the present invention, the first data interface module 20 may be a Type-C female interface or a Lightning female interface.

For example, when the device requiring access 110 is a mobile phone and the terminal 120 is a computer, the mobile phone directly performs data transmission with or is charged by the computer through the data transmission path formed by the first data interface module 20 and the general interface module.

As a possible implementation of the present invention, the second data interface module 40 may be a USB female interface.

For example, when the device requiring access 110 is a USB flash disk and the terminal 120 is a computer, the USB flash disk accesses the interface expansion apparatus 100 via the second data interface module 40, and the USB control unit 31 controls the data transmission between the USB flash disk and the terminal 120.

As a possible implementation of the present invention, the third data interface module is a Type-C female interface or a Lightning female interface.

For example, when the device requiring access 110 is a mobile phone and the terminal 120 is a computer, the mobile phone accesses the interface expansion apparatus 100 via the third data interface module **60,** and the USB control unit 31 controls data transmission between the mobile phone and the terminal 120, or the mobile phone is charged by controlling the USB conversion unit 32.

Further, as a possible implementation of the present invention, the first interface unit 11 is a Type-C male interface or a USB male interface.

Further, as a possible implementation of the present invention, the second interface unit 12 is a Type-C male interface or a USB male interface.

As shown in FIG. 2, it can be understood that when the first data transmission interface 121 and the second data transmission interface 122 in the terminal 120 are both Type-C female interfaces, the first interface unit 11 and the second interface unit 12 are both Type-C male interfaces. When the first data transmission interface 121 and the second data transmission interface 122 in the terminal 120 are both USB female interfaces, the first interface unit 11 and the second interface unit 12 are both USB male interfaces.

The working principle of the interface expansion apparatus 100 of the present invention will be illustrated in detail below in conjunction with FIG. 2.

As shown in FIG. 2, when the device requiring access 110 is connected to the interface expansion apparatus 100 via the first data interface module 20, a data transmission path is formed by the first interface unit 11 in the general interface module 10 and the first data interface module 20, so that the device requiring access 110 directly performs data transmission with the terminal 120 through the data transmission path.

When the device requiring access 110 accesses the interface expansion apparatus 100 via the second data interface module 40, the data transmission between the device requiring access 110 and the terminal 120 is controlled by the USB control unit.

When the device requiring access 110 accesses the interface expansion apparatus 100 via the video signal interface module 50,

target display information sent by the terminal is received by the mode control unit 34 in the data transmission control module 30. If the target display information needs format converting, the mode conversion unit 35 performs mode conversion on the target display information, and then sends same to the device requiring access 110 for display. If the target display information does not need format converting, the target display information is directly sent to the device requiring access 110 for display.

For example, when the device requiring access 110 is a display, the device requiring access 110 is connected to the interface expansion apparatus 100 via the video signal interface module 50, and then performs data transmission with the terminal 120. When the mode control unit 34 detects that the device requiring access 110 is connected to the video signal interface module 50, the mode control unit 34 transmits information for describing the device requiring access 110 to the terminal 120 by means of the second interface unit 12. The terminal 120 transmits a target display signal to the mode conversion unit 35, and the mode conversion unit 35 converts the target signal, that is, converting a DP signal into an HDMI signal, and then outputs the converted signal to the device requiring access 110 for display.

When the device requiring access 110 is a memory card, the memory card is connected to the interface expansion apparatus 100 via the memory card reading/writing module 70. By transmitting a control instruction to the interface expansion apparatus 100, the terminal 120 then controls the memory card conversion unit 33 to read/write data from/to the memory card by means of the USB control unit 31.

The present invention provides an interface expansion apparatus for providing a device requiring access with a data interface for connection to a terminal, the interface expansion apparatus comprising a general interface module for connection to the terminal, a first data interface module, a data transmission control module, a second data interface module, and a video signal interface module; when a device requiring access is connected to the interface expansion apparatus via the first data interface module, a data transmission path is formed by the first data interface module and the general interface module, so that the device requiring access performs data transmission with the terminal through the data transmission path; when the device requiring access is connected to the interface expansion apparatus via the second data interface module, the data transmission control module controls the data transmission between the device requiring access and the terminal; and when the device requiring access is connected to the interface expansion apparatus via the video signal interface module, the data transmission control module receives target display information sent by the terminal, and transmits the target display information to the device requiring access for display. The utilization rate of a data interface of the terminal is improved.

The above description is only preferred embodiments of the invention, not intended to limit the present invention, any modifications equivalent replacements, or improvements made within the spirit and principles of the present invention should be comprised within the scope of protection of the present invention.

## Claims

1. An interface expansion apparatus for providing a device requiring access with a data interface for connection to a terminal, the interface expansion apparatus comprising: a general interface module for connection to the terminal, a first data interface module, a data transmission control module, a second data interface module, and a video signal interface module,
wherein a signal transmission end of the first data interface module is connected to a first adapter end of the general interface module, a first data transmission end of the data transmission control module is connected to a second adapter end of the general interface module, a data end of the second data interface module is connected to a second data transmission end of the data transmission control module, and a signal end of the video signal interface module is connected to a third data transmission end of the data transmission control module;
when the device requiring access is connected to the interface expansion apparatus via the first data interface module, a data transmission path is formed by the first data interface module and the general interface module, so that the device requiring access performs data transmission with the terminal through the data transmission path; when the device requiring access is connected to the interface expansion apparatus via the second data interface module, the data transmission control module controls the data transmission between the device requiring access and the terminal; and
when the device requiring access is connected to the interface expansion apparatus via the video signal interface module, the data transmission control module receives target display information sent by the terminal, and transmits the target display information to the device requiring access for display.

2. The interface expansion apparatus of claim 1, wherein the interface expansion apparatus further comprises a third data interface module and a memory card reading/writing module;
the third data interface module is connected to a fourth data transmission end of the data transmission control module, and the memory card reading/writing module is connected to a memory card reading/writing end of the data transmission control module; and
when the device requiring access is a memory card, the memory card is connected to the interface expansion apparatus via the memory card reading/writing module, and the terminal reads/writes data from/to the memory card by means of the data transmission control module.

3. The interface expansion apparatus of claim 1, wherein the general interface module comprises a first interface unit and a second interface unit; and
a device connection end of the first interface unit is the first adapter end of the general interface module, and a device connection end of the second interface unit is the second adapter end of the general interface module.

4. The interface expansion apparatus of claim 2, wherein the data transmission control module comprises a USB control unit, a USB conversion unit, a memory card conversion unit, a mode control unit, and a mode conversion unit;
a first data end of the USB control unit, a first data end of the mode control unit, and a first data end of the mode conversion unit constitute the first data transmission end of the data transmission control module;
a second data end of the USB control unit is the second data transmission end of the data transmission control module;
a third data end of the USB control unit is connected to a second data end of the mode control unit, a third data end of the mode control unit is connected to a second data end of the mode conversion unit, and a third data end of the mode conversion unit is the third data transmission end of the data transmission control module;
a fourth data end of the USB control unit is connected to a first transmission of the USB conversion unit, and a second transmission of the USB conversion unit is the fourth data transmission end of the data transmission control module; and
a fifth data end of the USB control unit is connected to a signal transmission end of the memory card conversion unit, and the memory card conversion unit comprises a plurality of data transmission ends, the plurality of data transmission ends constituting the memory card reading/writing end of the data transmission control module.

5. The interface expansion apparatus of claim 1, wherein the video signal interface module comprises a VGA interface, a DVI interface, an HDMI interface, a Mini DP interface, or a DP interface.

6. The interface expansion apparatus of claim 1, wherein the first data interface module is a Type-C female interface or a Lightning female interface; and the second data interface module is a USB female interface.

7. The interface expansion apparatus of claim 2, wherein the third data interface module is a Type-C female interface or a Lightning female interface.

8. The interface expansion apparatus of claim 3, wherein the first interface unit is a Type-C male interface or a USB male interface.

9. The interface expansion apparatus of claim 3, wherein the second interface unit is a Type-C male interface or a USB male interface.

## Amended claims

### Amended claims under Art. 19.1 PCT

1. A port extension apparatus for extending ports of an end-user device comprising:
a main port module for connecting to an end-user device, the main port module having first and second port units;
a first data port module operatively connecting to the first port unit;
a data transmission control module operatively connecting to the second port unit via a first data transmission port of the data transmission control module;
a second data port module operatively connecting to a second data transmission port of the data transmission control module; and
a video port module operatively connecting to a third data transmission port of the data transmission control module.

2. The port extension apparatus as described in claim 1, wherein when a to-be-connected device connects to the first data port module, the first data port module and the main port module form a transmission path enabling data transmission between the to-be-connected device and the end-user device.

3. The port extension apparatus as described in claim 1, wherein when a to-be-connected device connects to the second data port module, the data transmission control module controls data transmission between the to-be-connected device and the end-user device.

4. The port extension apparatus as described in claim 1, wherein when a to-be-connected device connects to the video port module, the data transmission control module receives the to-be-displayed information from the end-user device to the to-be-connected device to display.

5. The port extension apparatus as described in claim 1, further comprising:
a third data port module operatively connecting to a fourth data transmission port of the data transmission control module; and
a memory card R/W (read/write) module operatively connecting to at least one data read/write port of the data transmission control module.

6. The port extension apparatus as described in claim 5, wherein the to-be-connected device comprises a memory card, which connects to the end-user device via the memory card R/W module and the data transmission control module.

7. The port extension apparatus as described in claim 5, wherein the data transmission control module comprises a USB (Universal Serial Bus) control unit, a USB conversion unit, a memory card conversion unit, a mode control unit and a mode conversion unit.

8. The port extension apparatus as described in claim 7, wherein the first data transmission port of the data transmission control module comprises a first data port of the USB control unit, a first data port of the mode control unit, and a first data port of the mode conversion unit.

9. The port extension apparatus as described in claim 8, wherein the second data transmission port of the data transmission control module is a second data port of the USB control unit.

10. The port extension apparatus as described in claim 9, wherein a third data port of the USB control unit connects to a second data port of the mode control unit and a third data port of the mode control unit connects to a second data port of the mode conversion unit.

11. The port extension apparatus as described in claim 10, wherein the third data transmission port of the data transmission module is a third data port of the mode conversion unit.

12. The port extension apparatus as described in claim 11, wherein a fourth data port of the USB control unit connects to a first data port of the USB conversion unit.

13. The port extension apparatus as described in claim 12, wherein is the fourth data transmission port of the data transmission control module is a second data port of the USB conversion unit.

14. The port extension apparatus as described in claim 13, wherein a fifth data port of the USB control unit connects to one of at least one data transmission port of the memory card conversion unit.

15. The port extension apparatus as described in claim 14, wherein the at least one data read/write port of the data transmission control module comprise the at least one data transmission port of the memory card conversion unit.

16. The port extension apparatus as described in claim 5, wherein the video port module comprises a VGA (Video Graphics Array) port, a DVI (Digital Visual Interface) port, an HDMI (High-Definition Multimedia Interface) port, a Mini DP (Mini DisplayPort) or a DP (DisplayPort).

17. The port extension apparatus as described in claim 5, wherein the first data port module comprises a Type-C female port or a Lighting female port.

18. The port extension apparatus as described in claim 5, wherein the second data port module comprises a USB (Universal Serial Bus) female port.

19. The port extension apparatus as described in claim 5, wherein the third data port module comprises a Type-C female port or a Lighting female port.

20. The port extension apparatus as described in claim 5, wherein the first port unit comprises a Type-C male port or a USB male port and the second port unit comprises a Type-C male port or a USB male port.
